# EUROPÄISCHE PATENTSCHRIFT

(11) **EP 1 623 799 B1**
(45) Veröffentlichungstag und Bekanntmachung des Hinweises auf die Patenterteilung: **10.10.2007**
(21) Anmeldenummer: 05014534.1
(22) Anmeldetag: 05.07.2005
(51) Int. Cl.: B25J 15/06, B65G 47/91, B66C 1/02

(54) **Saugbalken für eine Vorrrichtung zum Anheben und Umsetzen von Lasten**
Vacuum beam for a device for lifting and transferring loads
Poutre à vide pour un dispositif de levage et de transfert de charges

(30) Priorität: 03.08.2004 DE 102004037609
(43) Veröffentlichungstag der Anmeldung: 08.02.2006
(73) Patentinhaber: Thanner Zeichenbüro Maschinenbau GmbH, 6130 Schwaz (AT)
(72) Erfinder: Thanner, Erwin, 6130 Schwaz (AT); Thanner, Martin, 6130 Schwaz (AT)
(74) Vertreter: Meissner, Bolte & Partner

(56) Entgegenhaltungen:
- DE-A1- 3 543 152
- DE-A1- 3 834 866
- DE-U1- 29 512 750

## Beschreibung

Die Erfindung betrifft einen Saugbalken für eine Vorrichtung zum Anheben und Umsetzen von Lasten, insbesondere Werkstücken, mittels Unterdruck, umfassend eine Unterdruck-Erzeugungseinrichtung, ein Unterdruck-Vorspeichervolumen, einen Saugraum mit Strömungsventilen sowie eine zum Werkstück hin gerichtete, an Öffnungen des Saugraums anliegende Dichtmatte oder ein dementsprechendes Dichtprofil, gemäß Oberbegriff des Patentanspruchs 1, bekannt aus der DE-A-3 543 152.

Aus der DE 198 17 214 C2 ist ein Sauggreifer zum Ansaugen eines zu manipulierenden Werkstücks, mit einer Saugplatte, einem an der Saugplatte befestigten, am Werkstück anzulegenden Dichtprofil, welches einen Saugraum umschließt, und einen mit dem Saugraum verbundenen Unterdruckanschluss vorbekannt, wobei die dem Werkstück zugewandte Unterseite der Saugplatte mit Ausnehmungen versehen ist. Nach der dortigen Lösung sind die vorerwähnten Ausnehmungen linienförmig ausgebildet und in einem Rastermaß an der Unterseite der Saugplatte angeordnet, wobei in die Ausnehmungen ein gemeinsames vom Dichtprofil unabhängiges, Querkräfte aufnehmendes Einlegteil anordenbar ist.

Bei dem dortigen Sauggreifer ist eine separate Vorrichtung zum Speichern eines Unterdruckvolumens notwendig, der als sogenannter Saugkasten ausgebildet ist.

Auch der Sauggreifer nach DE 100 27 814 B4 zum Ansaugen und Anheben von Werkstücken weist einen einen Hohlraum aufweisenden Saugkasten auf, wobei der Hohlraum mit einer Unterdruckquelle in Verbindung steht und an seiner dem oder den Werkstücken zugewandten Seite eine Platte aufweist, die insbesondere mit Strömungswiderständen, Ventilen, Einzelsaugern oder dergleichen versehen ist. Ergänzend besitzt dieser Sauggreifer noch eine Beleuchtungseinrichtung.

Weitere Vakuum-Handhabungsvorrichtungen, insbesondere zum Umsetzen von Holz, umfassen einen Speicherkasten für den Unterdruckvorrat, welcher mit einem Vakuumerzeuger, beispielsweise in Form eines Hochleistungsgebläses in Verbindung steht. An den Speicherkasten sind verschiedene Saugbalken montierbar. Jeder Saugbalken weist an seiner Unterseite elastische Dichtmatten auf, die sich an Unebenheiten des anzuhebenden Werkstücks anpassen sollen. Vorhandene Einzelöffnungen an den Dichtmatten bzw. den Saugbalken sind mit Strömungsventilen ausgerüstet, die ein Zusammenbrechen des Vakuums bei dem Heben von Teilen verhindern sollen, wenn diese Teile kleiner sind als die untere Fläche des Saugbalkens. Typische Vakuum-Handhabungssysteme der vorbeschriebenen Art werden von der Firma J. Schmalz GmbH, Glatten, angeboten und vertrieben und sind aus der DE-U-295 12 750 bekannt.

Vorbekannte Saugkästen werden üblicherweise in Blechbauweise gefertigt und bestehen aus dem vorerwähnten Vorspeicherbehälter mit mindestens einer Saugkammer. Die Blechteile werden im Zuge der Fertigung miteinander verschraubt oder stoffschlüssig verbunden. Die Vakuumerzeugung erfolgt durch z.B. einen Seitenkanalverdichter oder mit Hilfe einer Vakuumpumpe. Über eine Schlauchleitung erfolgt dann die notwendige Verbindung zu dem oder den Saugkästen.

Es hat sich jedoch gezeigt, dass einer effektiven und kostengünstigen Fertigung sowie einer Anpassung an spezifische Kundenwünsche dann Grenzen gesetzt sind, wenn großvolumige Saugkästen als Vorspeicherbehälter notwendige Voraussetzung zum Anschluss von Saugbalken sind. Auch wenn das Raster der Saugbalken an z.B. eine Stapelbreite von Schnittholz anpassbar ist, muss grundsätzlich der Vakuumspeicher die maximal möglichen Abmessungen einzusetzender Saugbalken aufweisen. Damit ergeben sich aber objektive Grenzen hinsichtlich einer anzustrebenden Standardisierung.

Bei bekannten Vakuumsaugbalken-Hebevorrichtungen befinden sich diese an einem Hebezeug bzw. Tragbalken. Aufgrund der hohen Masse der Speicherkästen und der Saugbalken muss demnach das Hebezeug entsprechend groß dimensioniert werden, was sich ungünstig für die eigentliche Nutzhebelast auswirkt.

Aus dem Vorgenannten ist es daher Aufgabe der Erfindung, einen weiterentwickelten Saugbalken für eine Vorrichtung zum Anheben und Umsetzen von Lasten, insbesondere Werkstücken mittels Unterdruck, umfassend eine Unterdruck-Erzeugungseinrichtung, ein Unterdruck-Vorspeichervolumen, einen Saugraum mit Strömungsventilen sowie eine zum Werkstück hin gerichtete, an Öffnungen des Saugraums anliegende Dichtmatte oder ein dementsprechendes Dichtprofil anzugeben, wobei der Saugbalken individuell und kostengünstig sowie an unterschiedlichste Kundenwünsche herstell- und anpassbar sein soll und hierbei das Ziel besteht, die Masse des Saugbalkens selbst in Grenzen zu halten, so dass sich die effektive Nutzlast einer entsprechenden Hebevorrichtung erhöht.

Weiterhin ist es Aufgabe der Erfindung, den Saugbalken derart auszuführen, dass eine leichte Austauschbarkeit gewährleistet ist und im Reparaturfall ein schnelles Wiederherstellen eines funktionsgemäßen Zustands erfolgen kann.

Die Lösung der Aufgabe der Erfindung erfolgt durch einen Saugbalken für eine Vorrichtung zum Anheben und Umsetzen von Lasten, insbesondere Werkstücke mittels Unterdruck, gemäß den Merkmalen des Patentanspruchs 1, wobei die Unteransprüche mindestens zweckmäßige Ausgestaltungen und Weiterbildungen darstellen.

Erfindungsgemäß wird das grundsätzlich notwendige Unterdruck-Vorspeichervolumen und der Saugraum in einer baulichen Einheit zusammengefasst, wobei die bauliche Einheit durch ein Doppelkammer-Hohlprofil gebildet wird.

Dieses Doppelkammer-Hohlprofil, was z.B. als Strangprofil herstellbar ist, kann je nach Bedarf abgelängt und an den Stirnseiten verschlossen werden.
Die Profilkammer des Unterdruck-Speichervolumens im Doppelkammer-Hohlprofil kann um ein Vielfaches größer gewählt sein als die Profilkammer des Saugraums.

Zur leichteren Montage und Demontage am Hebezeug bzw. an einem Tragbalken weist das Doppelkammer-Hohlprofil an mindestens einer seiner Außenseiten Befestigungsnuten, insbesondere sogenannte T-Nuten auf.

Die Trennwand des Doppelkammer-Hohlprofils umfasst einen durch einen Kolben eines Zylinders verschließbaren Öffnungsabschnitt bzw. mehrere derartige Öffnungsabschnitte, denen jeweils eine Kolben-Zylinderanordnung zugeordnet ist.

In einer bevorzugten Ausführungsform der Erfindung sind in dem Saugraum des Hohlprofils von außen zugängliche, montier- und demontierbare Strömungsventile eingesetzt.

Ebenso besitzt der Saugraum mindestens einen Belüftungszylinder.

Die das Unterdruck-Vorspeichervolumen bildende Profilkammer kann eine integrierte Vakuum-Erzeugungseinrichtung aufweisen.

Es liegt im Sinne der Erfindung, dass sämtliche pneumatischen und/oder elektrischen Steuer- oder Verbindungsleitungen für die Funktionselemente innerhalb der Profilkammern untergebracht werden.

An einer der Profilaußenseiten ist ein elektrischer und/oder pneumatischer Anschluss, insbesondere in Form eines Schnellverschlusses vorgesehen, so dass der jeweilige Saugbalken ohne weiteres und ohne großen Verkabelungs- oder Anschlussaufwand an eine übergeordnete Steuerung anschließbar ist.

In einer Ausführungsform der Erfindung weist das Doppelkammer-Hohlprofil einen rechteckförmigen Querschnitt auf, wobei mindestens die Einzelkammer des Unterdruck-Speichervolumens ebenfalls rechteckförmig ausgebildet ist.

Bei einer solchen rechteckförmigen Profilausgestaltung besteht die Möglichkeit, wahlweise Saugraumöffnungen und Dichtprofil oder Dichtmatte in bzw. an der Breitseite oder der Schmalseite des Rechteckprofils vorzusehen, so dass eine weitere Möglichkeit der individuellen Planung und des Einsatzes dementsprechend realisierter Saugbalken gegeben ist.

Zum Erhalt der gewünschten Volumenverhältnisse der Profilkammern untereinander, kann die Saugraum-Profilkammer mittels einer gleichzeitig mechanisch verstärkenden Trennwand unterteilt werden, wobei in einem Teilvolumen dann die Saugraumöffnungen und die Strömungsventile vorgesehen bzw. untergebracht sind.

Das Doppelkammer-Hohlprofil kann aus einem metallischen, insbesondere Aluminium- oder Kunststoffmaterial bestehen.

Ergänzend besteht bezüglich der Zuführung des notwendigen Vakuums die Möglichkeit, an der Profilkammer für das Unterdruck-Speichervolumen einen Flansch zum Anschluss einer externen Vakuum-Erzeugungseinrichtung vorzusehen.

Zusammenfassend geht die Erfindung von einem einzigen stranggepressten Profilkörper aus, welcher Vorspeicherkammer, d.h. das Unterdruck-Vorspeichervolumen, und Saugkammer aufweist.
Die Ausführung des Profilkörpers ist dabei so gewählt, dass die komplette Technik für den Funktionsablauf zwischen Vorspeicherkammer und Saugkammer, bestehend aus Pneumatikventilen, Trennzylinder und Strömungsventilen, im Profilkörper untergebracht werden kann.

Wie dargelegt, kann die Vakuumerzeugung nicht nur extern, sondern auch intern im Profilkörper mittels eines Vakuumejektors nach dem Venturi-Prinzip realisiert werden.

Bei einer externen Vakuumversorgung, z.B. mittels eines Seitenkanalverdichters, besteht die Möglichkeit, im Profilkörper den vorerwähnten Belüftungszylinder zum Lösen angesaugter Teile unterzubringen.

Saugseitig wird auf die jeweilige Profilfläche von außen als Dichtmittel eine Schaumstoff-Dichtmatte z.B. durch Kleben befestigt.

Die Erfindung soll nachstehend anhand eines Ausführungsbeispiels sowie unter Zuhilfenahme von Figuren näher erläutert werden.

Hierbei zeigen:

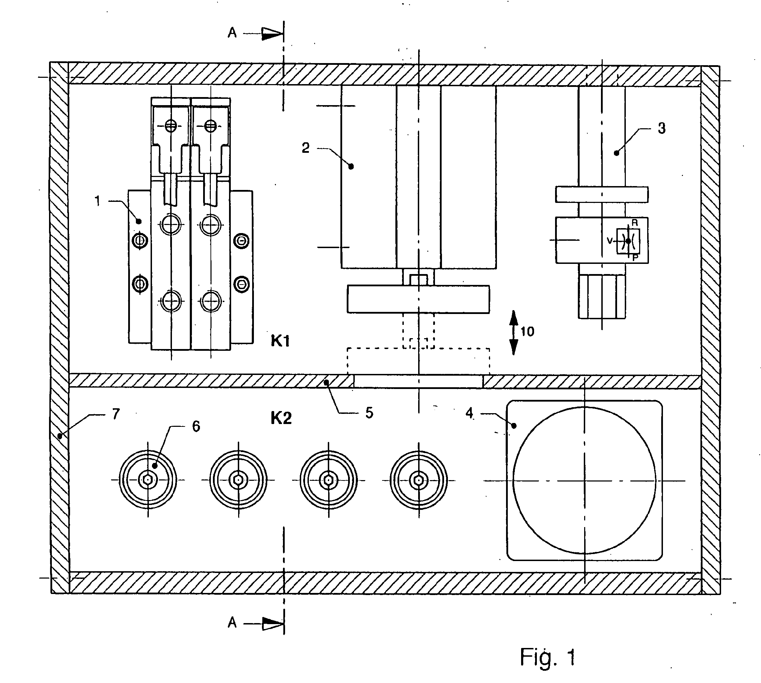

- Fig. 1: einen Längsschnitt durch einen erfindungsgemäßen Saugbalken;
- Fig. 2: einen Querschnitt durch einen Saugbalken gemäß Fig. 1;

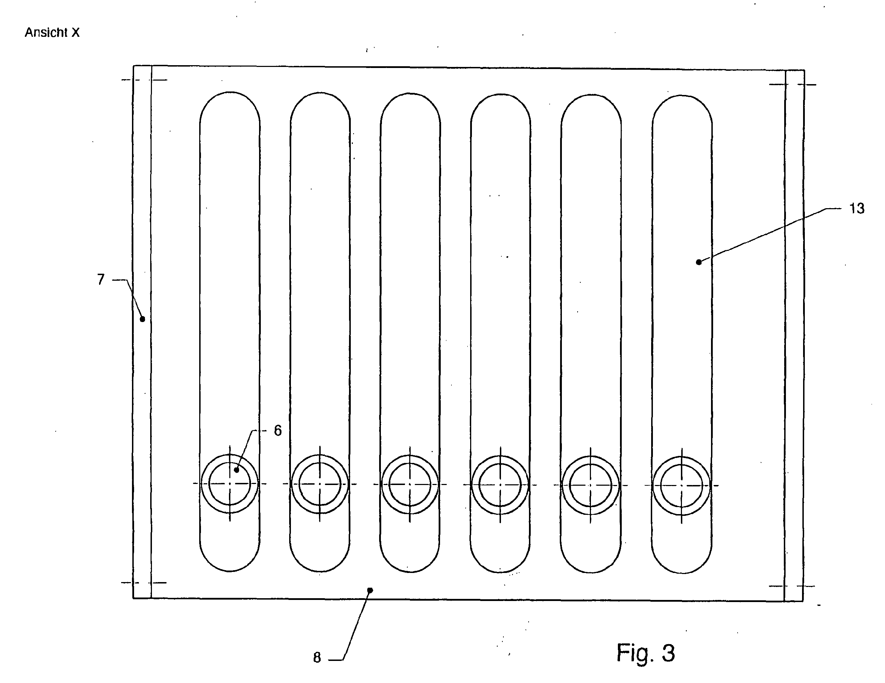

- Fig. 3: eine Ansicht der Ansaugseite des Saugbalkens (ohne Werkstück) und
- Fig. 4: eine Anordnung des Saugbalkens mit Dichtmatte entlang der Schmalseite des Profils.

Der Saugbalken gemäß den figürlichen Darstellungen geht von einer Unterdruck-Vorspeicherkammer K1 und einer Saugkammer K2 aus.

In der Kammer K1 wird durch einen internen Vakuumerzeuger 3 oder bei höherem Vakuumbedarf bzw. bei einer großen Länge des Saugbalkens durch einen externen Vakuumerzeuger, wie z.B. einen Seitenkanalverdichter, Vakuum aufgebaut und vorgespeichert.

Beim eigentlichen Ansaugvorgang auf diverse anzusaugende Werkstücke, wie z.B. Bretterlagen, wird durch einen Trennzylinder 2 mit Hubbewegung 10 ein Kolben in eine Öffnungslage verfahren, so dass eine schlagartige Verbindung zur Ansaugkammer K2 über eine entsprechende Öffnung in der Profilkammer-Trennwand hergestellt wird.

Durch diese plötzliche Vakuumerzeugung in der Saugkammer K2 bedingt durch das vorgespeicherte Vakuum in der Kammer K1 werden nicht mit Werkstücken belegte Saugschlitze 13 durch die Funktion von den in der Saugkammer K2 eingebauten Strömungsventilen 6 durch den sich ergebenden hohen Luftstrom selbständig verschlossen.

Die mit einem Werkstück belegten Saugschlitze lassen eine Luftstromerzeugung durch das Anliegen einer auf der Saugseite angebrachten Schaumstoff-Dichtmatte 8 nicht zu und werden somit nicht durch die eingebauten Strömungsventile verschlossen, d.h. in diesem Fall angesaugt.

Die Vorspeicherkammer K1 ist so ausgelegt, dass die pneumatischen Steuerungskomponenten und bei geringerem Vakuumbedarf auch die Vakuum-Erzeugungseinrichtung 3 in dieser untergebracht werden kann.

Die Anzahl der Strömungsventile 6 kann je nach Anwendungsfall und je nach Saugbalkenlänge variieren.

Erfindungsgemäß können Saugsysteme in dieser Profilbauweise, da sie quasi in Stangenform herstellbar sind, sehr schnell auf Kundenwunsch in der gewünschten Länge gefertigt sowie das Integrieren der kompletten Technik und das Verschließen durch Enddeckel 7 sehr rasch und kostengünstig vorgenommen werden.

Durch die in den Profilkörper eingebrachten T-Nuten 12 können derartige Saugsysteme auf bestehenden Manipulatoren, Handhabungs-Robotern, aber auch bei Neukonstruktionen unkompliziert und rasch montiert werden.

Durch die kompakte Bauweise und die vorgesehenen T-Nuten 12 ist es bei Bedarf mittels einer Adapterplatte ebenso möglich, mehrere Saugbalken nebeneinander bevorzugt parallel anzuordnen, um die Ansaugkraft in Summe zu erhöhen.

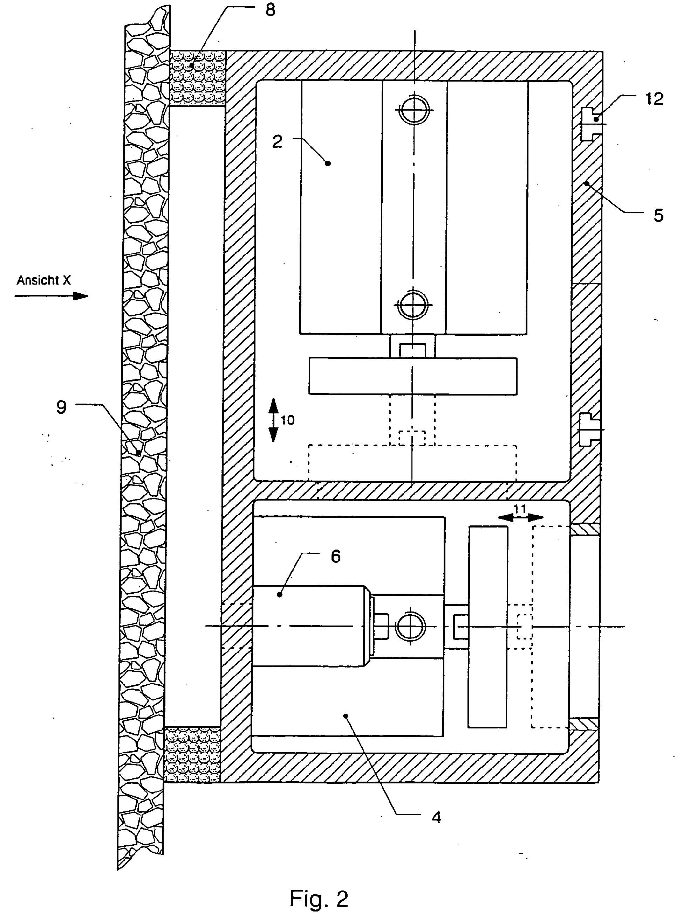

Fig. 2 zeigt ergänzend noch einen Belüftungszylinder 4 mit einem entsprechenden im oberen Teil dargestellten Kolben, welcher eine Belüftungsöffnung an der Außenwandung des Doppelkammer-Hohlprofils 5 öffnet bzw. verschließt, um ein Lösen des Werkstücks 9 zu bewirken.

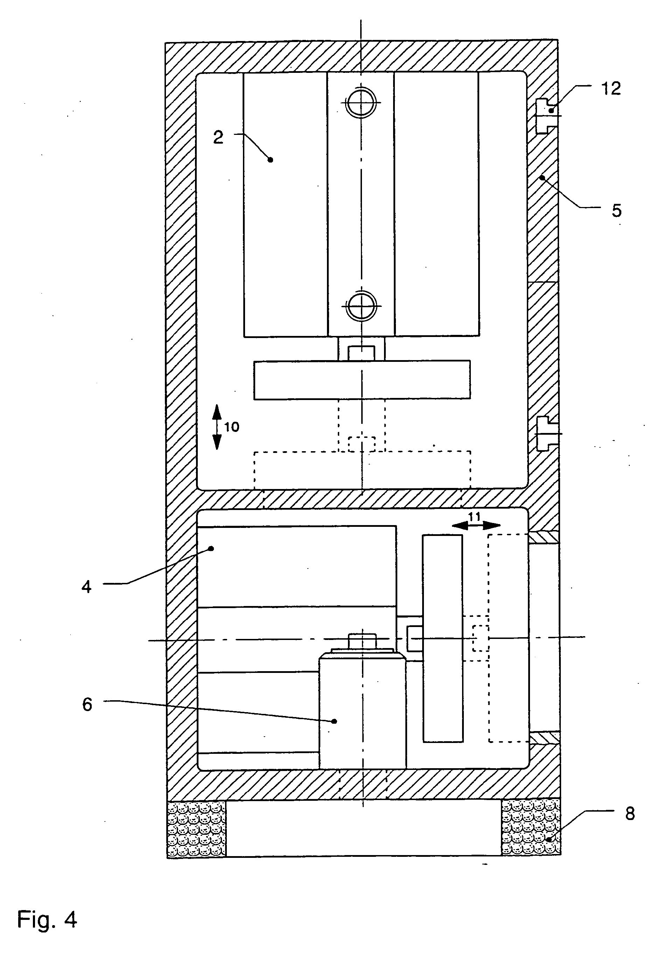

Die Ausführungsformen nach Fig. 2 und 4 zeigen die Möglichkeit auf, wie unter Beachtung eines bevorzugten rechteckigförmigen Doppelkammer-Hohlprofils sowohl die Breitseite als auch die Schmalseite des Profilkörpers die eigentliche Saugseite darstellen kann.
Fig. 2 zeigt die Möglichkeit der Anordnung der Schaumstoff-Dichtmatte 8 an der breiteren Seite des Profils; Fig. 4 hingegen eine Ausführungsform der Anordnung der Schaumstoff-Dichtmatte 8 an der Schmalseite mit entsprechend zugeordneter Öffnung im Profilmaterial nebst demgemäß orientiertem Strömungsventil 6.

Gemäß einem weiteren Ausführungsbeispiel ist ein Flansch mit einer Öffnung in der Außenwandung des Doppelkammer-Hohlprofils verbunden, wobei der Flansch über einen Schlauchanschluss mit einer externen (nicht gezeigten) Vakuum-Erzeugungseinrichtung in Verbindung steht.

## Patentansprüche

1. Saugbalken für eine Vorrichtung zum Anheben und Umsetzen von Lasten, insbesondere Werkstücken, mittels Unterdruck, umfassend eine Unterdruck-Erzeugungseinrichtung (3), ein Unterdruck-Vorspeichervolumen (K1), einen Saugraum (K2) mit Strömungsventilen (6) sowie eine zum Werkstück (9) hin gerichtete, an Öffnungen des Saugraums anliegende Dichtmatte (8) oder ein dementsprechendes Dichtprofil,
**dadurch gekennzeichnet, dass**
das Unterdruck-Vorspeichervolumen (K1) und der Saugraum (K2) von einer baulichen Einheit umfasst sind, wobei die bauliche Einheit durch ein Doppelkammer-Hohlprofil (5) gebildet wird, welches nach Bedarf abgelängt und an den Stirnseiten verschließbar ist.

2. Saugbalken nach Anspruch 1,
**dadurch gekennzeichnet, dass**
das Doppelkammer-Hohlprofil m(5) an mindestens einer Außenseite Befestigungsnuten, insbesondere T-Nuten (12) aufweist.

3. Saugbalken nach Anspruch 1 oder 2,
**dadurch gekennzeichnet, dass**
die Trennwand des Doppelkammer-Hohlprofils (5) einen durch einen Kolben eines Zylinders (2) verschließbaren Öffnungsabschnitt umfasst.

4. Saugbalken nach einem der vorangegangenen Ansprüche,
**dadurch gekennzeichnet, dass**
in dem Saugraum (K2) des Hohlprofils (5) von außen zugängliche, montier- und demontierbare Strömungsventile (6) eingesetzt sind.

5. Saugbalken nach einem der vorangegangenen Ansprüche,
**dadurch gekennzeichnet, dass**
der Saugraum (K2) mindestens einen Belüftungszylinder (4) aufweist.

6. Saugbalken nach einem der vorangegangenen Ansprüche,
**dadurch gekennzeichnet, dass**
die das Unterdruck-Vorspeichervolumen (K1) bildende Profilkammer eine integrierte Vakuum-Erzeugungseinrichtung aufweist.

7. Saugbalken nach einem der vorangegangenen Ansprüche,
**dadurch gekennzeichnet, dass**
sämtliche pneumatischen oder elektrischen Steuer- oder Verbindungsleitungen innerhalb der Profilkammern (K1; K2) untergebracht sind.

8. Saugbalken nach einem der vorangegangenen Ansprüche,
**dadurch gekennzeichnet, dass**
an einer der Profilaußenseiten ein elektrischer und/oder pneumatischer Anschluss vorgesehen ist.

9. Saugbalken nach einem der vorangegangenen Ansprüche,
**dadurch gekennzeichnet, dass**
das Doppelkammer-Hohlprofil (5) einen rechteckförmigen Querschnitt aufweist, wobei mindestens die Einzelkammer des Unterdruck-Speichervolumens (K1) ebenfalls rechteckförmig ausgebildet ist.

10. Saugbalken nach Anspruch 9,
**dadurch gekennzeichnet, dass**
wahlweise Saugraumöffnungen (13) und Dichtprofil oder Dichtmatte (8) in bzw. an der Breitseite oder der Schmalseite des Rechteckprofils vorgesehen sind.

11. Saugbalken nach einem der vorangegangenen Ansprüche,
**dadurch gekennzeichnet, dass**
zum Erhalt der gewünschten Volumenverhältnisse der Profilkammern die Saugraum-Profilkammer mittels einer gleichzeitig mechanisch verstärkenden Trennwand unterteilt ist, wobei in einem Teilvolumen die Saugraumöffnungen (13) vorgesehen sind.

12. Saugbalken nach einem der vorangegangenen Ansprüche,
**dadurch gekennzeichnet, dass**
das Profil (5) aus einem metallischen oder Kunststoffmaterial besteht.

13. Saugbalken nach einem der vorangegangenen Ansprüche,
**dadurch gekennzeichnet, dass**
an der Profilkammer für das Unterdruck-Speichervolumen (K1) ein Flansch zum Anschluss einer externen Vakuum-Erzeugungseinrichtung vorgesehen ist.

## Claims

1. Suction beam for a device for lifting and shifting loads, especially work pieces, by means of a vacuum, comprising a vacuum generator (3), a vacuum prestorage volume (K1), a suction chamber (K2) with flow valves (6) as well as a sealing mat (8) or a corresponding sealing gasket directed toward the work piece (9) and adjacent to openings of the suction chamber,
**characterized in that**
the vacuum prestorage volume (K1) and the suction chamber (K2) are enclosed by a constructional unit, wherein the constructional unit is formed by a double-chamber hollow section (5) which, in case of need, is cut to length and closable on the front sides.

2. Suction beam according to claim 1,
**characterized in that**
the double-chamber hollow section (5) comprises fixing slots, specifically T-slots (12) on at least one outside.

3. Suction beam according to claim 1 or 2,
**characterized in that**
the partition wall of the double-chamber hollow section (5) comprises an opening portion closable by a piston of a cylinder (2).

4. Suction beam according to one of the preceding claims,
**characterized in that**
externally accessible, mountable and dismountable flow valves (6) are inserted in the suction chamber (K2) of the hollow section (5).

5. Suction beam according to one of the preceding claims,
**characterized in that**
the suction chamber (K2) comprises at least one aeration cylinder (4).

6. Suction beam according to one of the preceding claims,
**characterized in that**
the section chamber forming the vacuum prestorage volume (K1) comprises an integrated vacuum generator.

7. Suction beam according to one of the preceding claims,
**characterized in that**
all pneumatic or electric control or connecting lines are accommodated inside the section chambers (K1; K2).

8. Suction beam according to one of the preceding claims,
**characterized in that**
an electrical and/or pneumatic connector is provided on one of the outsides of the section.

9. Suction beam according to one of the preceding claims,
**characterized in that**
the double-chamber hollow section (5) has a rectangular cross section, wherein at least the individual chamber of the vacuum storage volume (K1) is rectangular as well.

10. Suction beam according to claim 9,
**characterized in that**
suction chamber openings (13) and sealing gasket or sealing mat (8) are optionally provided on the broad side or the narrow side, respectively, of the rectangular section.

11. Suction beam according to one of the preceding claims,
**characterized in that**,
for obtaining the desired ratios of volumes of the section chambers, the section chamber of the suction chamber is subdivided by a simultaneously mechanically reinforcing partition wall, wherein the suction chamber openings (13) are provided in a partial volume.

12. Suction beam according to one of the preceding claims,
**characterized in that**
the section (5) is made of a metallic or synthetic material.

13. Suction beam according to one of the preceding claims,
**characterized in that**
a flange is provided on the section chamber for the vacuum storage volume (K1) to connect an external vacuum generator.

## Revendications

1. Poutre à aspiration pour un dispositif de levage et de transfert de charges, en particulier des pièces d'oeuvre, au moyen d'une dépression, comportant un dispositif de production de dépression (3), un volume de pré-stockage de dépression (K1), une chambre d'aspiration (K2) avec des vannes d'écoulement (6), ainsi qu'une nappe d'étanchéité (8), orientée vers la pièce d'oeuvre (9) et en appui contre des orifices de la chambre d'aspiration, ou un profilé d'étanchéité correspondant,
**caractérisée en ce que** le volume de pré-stockage de dépression (K1) et la chambre d'aspiration (K2) sont entourés par une unité, l'unité étant formée par un profilé creux à deux chambres (5), qui est coupé à longueur en fonction des besoins et qui peut être fermé sur les faces frontales.

2. Poutre à aspiration selon la revendication 1, **caractérisée en ce que** le profilé creux à deux chambres (5) comporte, sur au moins une face extérieure, des rainures de fixation, en particulier des rainures en T (12).

3. Poutre à aspiration selon la revendication 1 ou 2, **caractérisée en ce que** la cloison dans le profilé creux à deux chambres (5) comporte une partie ouverte pouvant être obturée par un piston d'un cylindre (2).

4. Poutre à aspiration selon l'une quelconque des revendications précédentes, **caractérisée en ce que** des vannes d'écoulement (6), aptes à être montées et démontées, accessibles de l'extérieur, sont mises en place dans la chambre d'aspiration (K2) du profilé creux (5).

5. Poutre à aspiration selon l'une quelconque des revendications précédentes, **caractérisée en ce que** la chambre d'aspiration (K2) comporte au moins un cylindre d'admission d'air (4).

6. Poutre à aspiration selon l'une quelconque des revendications précédentes, **caractérisée en ce que** la chambre du profilé formant le volume de pré-stockage de dépression (K1) comporte un dispositif de production de vide intégré.

7. Poutre à aspiration selon l'une quelconque des revendications précédentes, **caractérisée en ce que** toutes les lignes de commande ou de liaison pneumatiques ou électriques sont logées à l'intérieur des chambres du profilé (K1 ; K2).

8. Poutre à aspiration selon l'une quelconque des revendications précédentes, **caractérisée en ce qu'**un raccord électrique et/ou pneumatique est prévu sur une des faces extérieures du profilé.

9. Poutre à aspiration selon l'une quelconque des revendications précédentes, **caractérisée en ce que** le profilé creux à deux chambres (5) a une section rectangulaire, sachant qu'au moins la chambre formant le volume de pré-stockage de dépression (K1) est également réalisée avec une forme rectangulaire.

10. Poutre à aspiration selon la revendication 9, **caractérisée en ce que** des orifices (13) de la chambre d'aspiration et le profilé d'étanchéité ou la nappe d'étanchéité (8) sont prévus au choix sur le grand côté ou le petit côté du profilé rectangulaire.

11. Poutre à aspiration selon l'une quelconque des revendications précédentes, **caractérisée en ce que**, pour obtenir les conditions de volume souhaitées dans les chambres du profilé, la chambre du profilé formant la chambre d'aspiration est subdivisée par une cloison formant en même temps un renfort mécanique, les orifices (13) étant prévus dans un volume partiel de ladite chambre.

12. Poutre à aspiration selon l'une quelconque des revendications précédentes, **caractérisée en ce que** le profilé (5) est réalisé dans un matériau métallique ou une matière plastique.

13. Poutre à aspiration selon l'une quelconque des revendications précédentes, **caractérisée en ce que** sur la chambre du profilé formant le volume de pré-stockage de dépression (K1), il est prévu une bride pour le raccordement d'un dispositif de production de vide externe.
